# EUROPEAN PATENT APPLICATION

(11) **EP 4 261 856 A1**
(43) Date of publication of application: **18.10.2023**
(21) Application number: 20965082.9
(22) Date of filing: 09.12.2020
(51) Int. Cl.: H01F 30/10

(54) **TRANSFORMER FOR VEHICLES AND VEHICLE COMPRISING SAME**

(71) Applicant: MITSUBISHI ELECTRIC CORPORATION, Chiyoda-ku Tokyo 100-8310 (JP)
(72) Inventor: NISHIMURA, Takayuki, Tokyo 100-8310 (JP)
(74) Representative: Witte, Weller & Partner Patentanwälte mbB
(86) International application number: PCT/JP2020/045902
(87) International publication number: WO 2022/123699

(57) **Abstract**

An additional secondary winding (5) is wound around a core in parallel with a secondary winding (4), and connectable in series with the secondary winding (4). A first additional winding (5S) is wound around the core in the same direction as that of the secondary winding (4). A second additional winding (5T) is wound around the core in the opposite direction to that of the secondary winding (4) and connected in series with the first additional winding (5S). The total number of turns of the second additional winding (5T) included in the additional secondary winding (5) is the sum of the number of turns of the first additional winding (5S) included in the additional secondary winding (5) and the number of turns of the secondary winding (4). A traction transformer is configured to select, through switching of electrical connection between each of the secondary winding (4) and the additional secondary winding (5) and a load, each of a state in which the load is connected to both ends of the secondary winding (4), a state in which the load is connected to both ends of the additional secondary winding (5), and a state in which the load is connected to the secondary winding (4) and the additional secondary winding (5) that are connected in series with each other.

## Description

### TECHNICAL FIELD

The present disclosure relates to a traction transformer and a railroad vehicle including the same.

### BACKGROUND ART

WO 2009/110061 (PTL 1) is a prior art document disclosing a configuration of a traction transformer. The traction transformer described in PTL 1 includes a first high-voltage side coil, a first low-voltage side coil, a second low-voltage side coil, and a first switch. The first low-voltage side coil and the second low-voltage side coil are provided such that a magnetic flux generated by a current flowing through the first low-voltage side coil and a magnetic flux generated by a current flowing through the second low-voltage side coil cancel each other out when a voltage is supplied via the first switch. The traction transformer operates in an alternating-current (AC) section as a transformer, which is an apparatus for an AC section, and operates in a direct-current (DC) section as a reactor, which is an apparatus for a DC section.

### CITATION LIST

### PATENT LITERATURE

PTL 1: WO 2009/110061

### SUMMARY OF INVENTION

### TECHNICAL PROBLEM

In a traction transformer, a leakage inductance is an important factor that affects the magnitude of losses and the degree of interference with other coils. A leakage inductance value depends on a coil configuration of the transformer, and cannot be changed after the transformer has been manufactured.

The present disclosure has been made in view of the problem above, and an object of the present disclosure is to provide a traction transformer in which a plurality of leakage inductance values can be selected, and a railroad vehicle including the same.

### SOLUTION TO PROBLEM

A traction transformer based on the present disclosure includes a core, a primary winding, a secondary winding, and an additional secondary winding. The primary winding is wound around the core. The secondary winding is wound around the core in parallel with the primary winding. The additional secondary winding is wound around the core in parallel with the secondary winding, and connectable in series with the secondary winding. The additional secondary winding includes at least one additional winding unit. The additional winding unit is formed of a first additional winding and a second additional winding. The first additional winding is wound around the core in the same direction as that of the secondary winding. The second additional winding is wound around the core in the opposite direction to that of the secondary winding and connected in series with the first additional winding. The total number of turns of the second additional winding included in the additional secondary winding is the sum of the number of turns of the first additional winding included in the additional secondary winding and the number of turns of the secondary winding. The traction transformer is configured to select, through switching of electrical connection between each of the secondary winding and the additional secondary winding and a load, each of a state in which the load is connected to both ends of the secondary winding, a state in which the load is connected to both ends of the additional secondary winding, and a state in which the load is connected to the secondary winding and the additional secondary winding that are connected in series with each other.

### ADVANTAGEOUS EFFECTS OF INVENTION

According to the present disclosure, a plurality of leakage inductance values can be selected in the traction transformer.

### BRIEF DESCRIPTION OF DRAWINGS

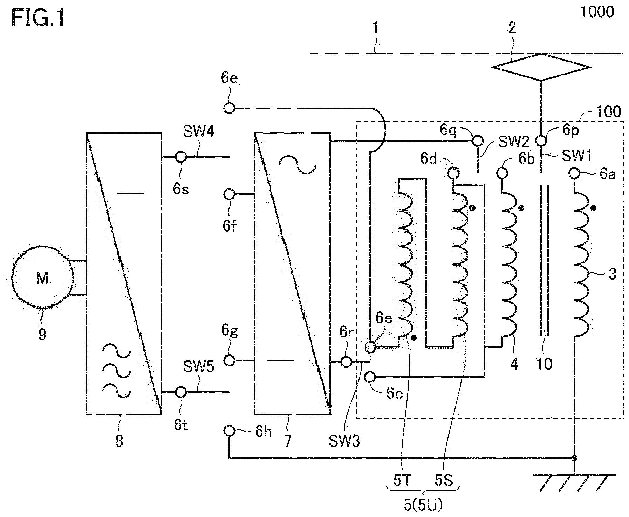

Fig. 1 is a circuit diagram showing a configuration of a railroad vehicle equipped with a traction transformer according to a first embodiment.

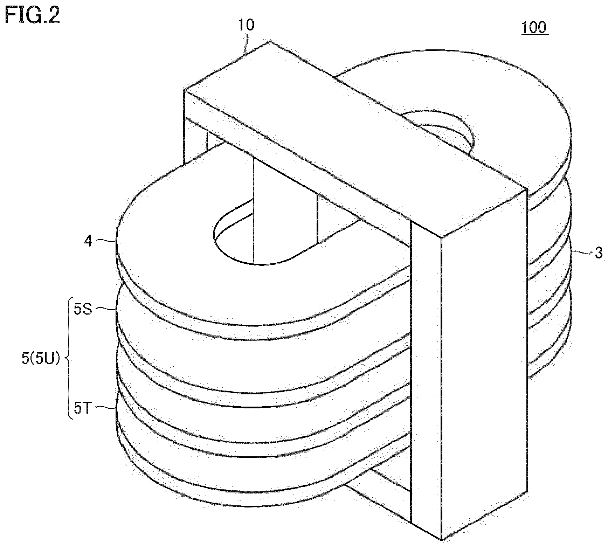

Fig. 2 is a perspective view showing the outer appearance of the traction transformer according to the first embodiment.

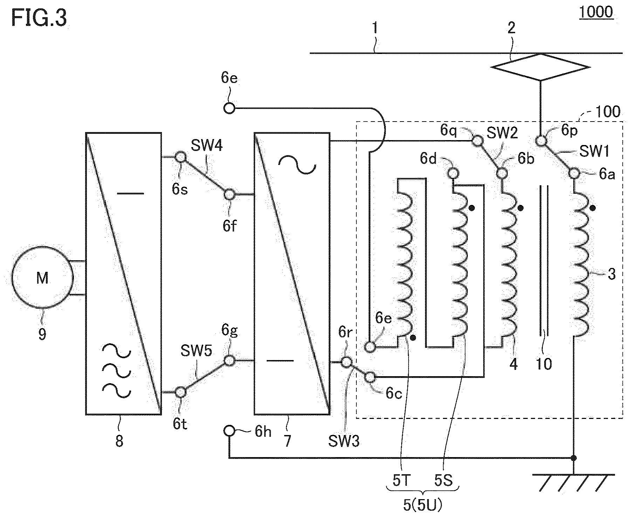

Fig. 3 is a circuit diagram showing a state in which a load is connected to both ends of a secondary winding in the traction transformer according to the first embodiment.

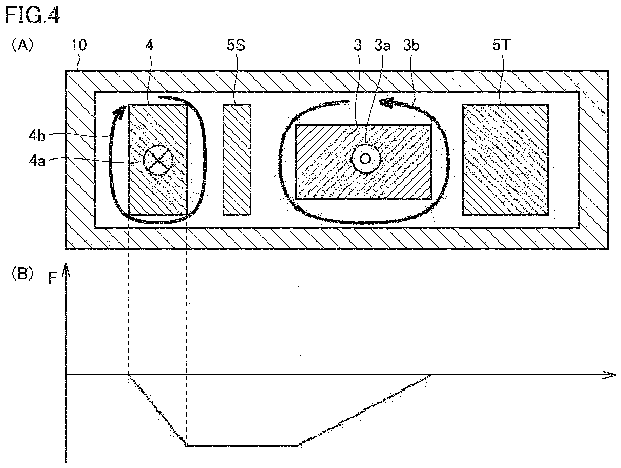

Fig. 4 (A) is a cross-sectional view as seen from one of windows of a core, which shows currents and magnetic fluxes generated in the traction transformer according to the first embodiment in the state in which the load is connected to both ends of the secondary winding, and (B) is a graph showing a leakage flux generated in the core of the traction transformer according to the first embodiment in the state in which the load is connected to both ends of the secondary winding.

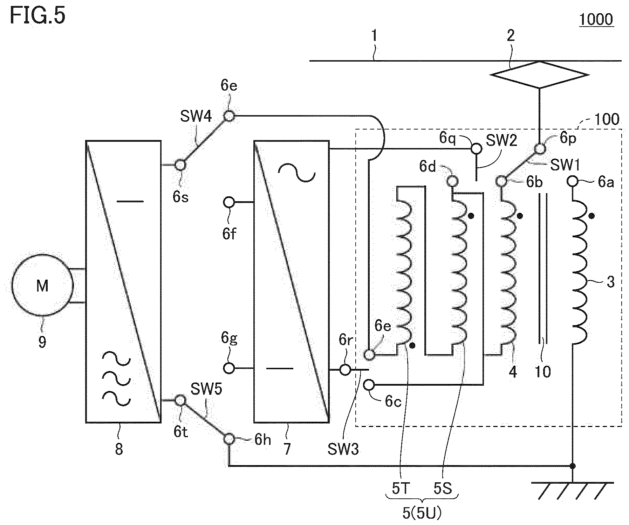

Fig. 5 is a circuit diagram showing a state in which a load is connected to the secondary winding and an additional secondary winding that are connected in series with each other in the traction transformer according to the first embodiment.

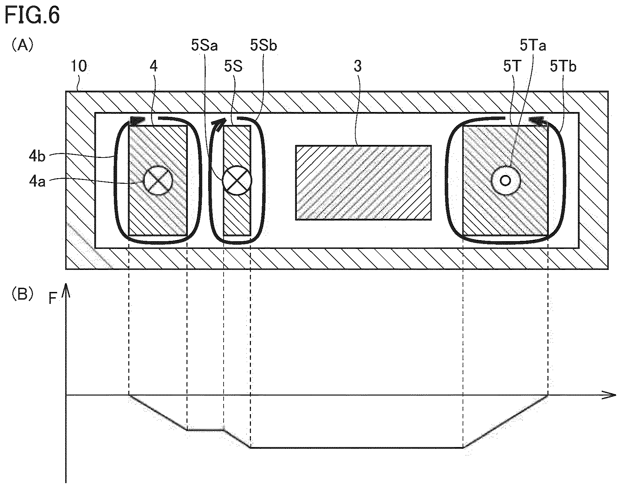

Fig. 6 (A) is a cross-sectional view as seen from one of the windows of the core, which shows currents and magnetic fluxes generated in the traction transformer according to the first embodiment in the state in which the load is connected to the secondary winding and the additional secondary winding that are connected in series with each other, and (B) is a graph showing a leakage flux generated in the core of the traction transformer according to the first embodiment in the state in which the load is connected to the secondary winding and the additional secondary winding that are connected in series with each other.

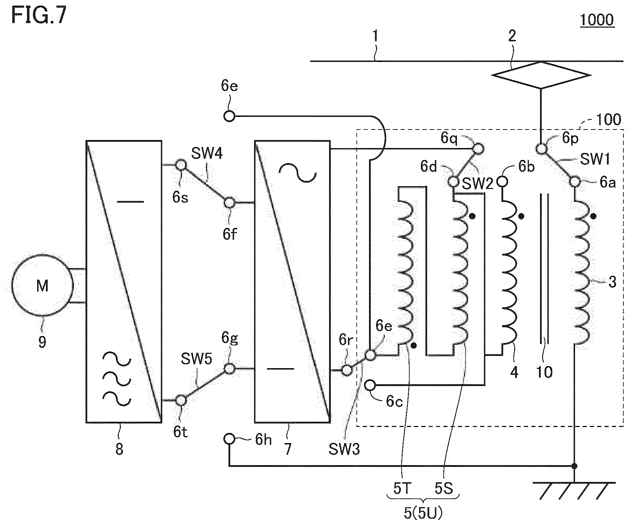

Fig. 7 is a circuit diagram showing a state in which a load is connected to both ends of the additional secondary winding in the traction transformer according to the first embodiment.

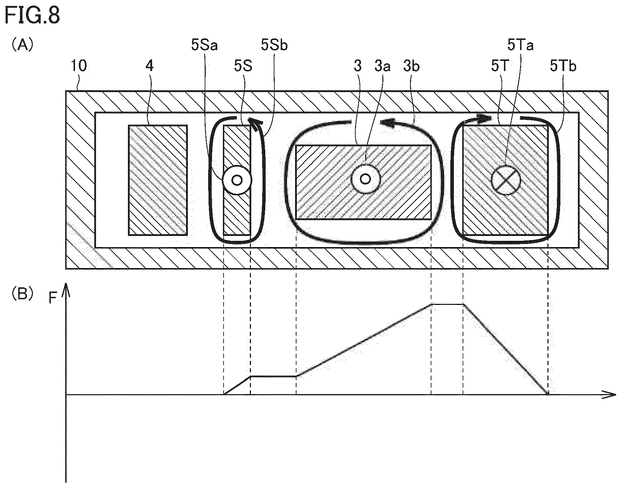

Fig. 8 (A) is a cross-sectional view as seen from one of the windows of the core, which shows currents and magnetic fluxes generated in the traction transformer according to the first embodiment in the state in which the load is connected to both ends of the additional secondary winding, and (B) is a graph showing a leakage flux generated in the core of the traction transformer according to the first embodiment in the state in which the load is connected to both ends of the additional secondary winding.

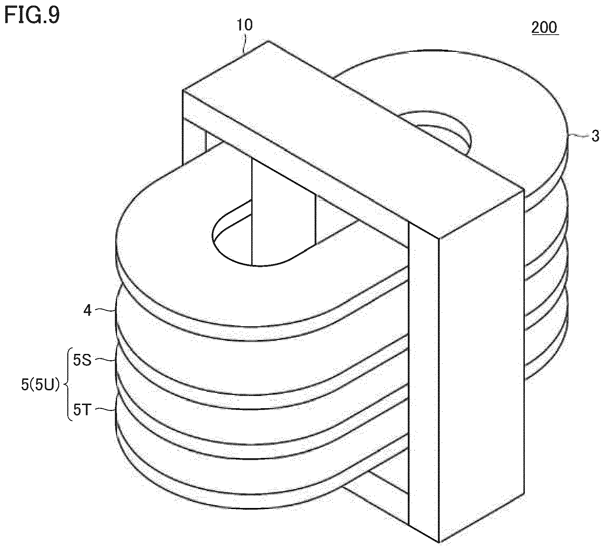

Fig. 9 is a perspective view showing the outer appearance of a traction transformer according to a second embodiment.

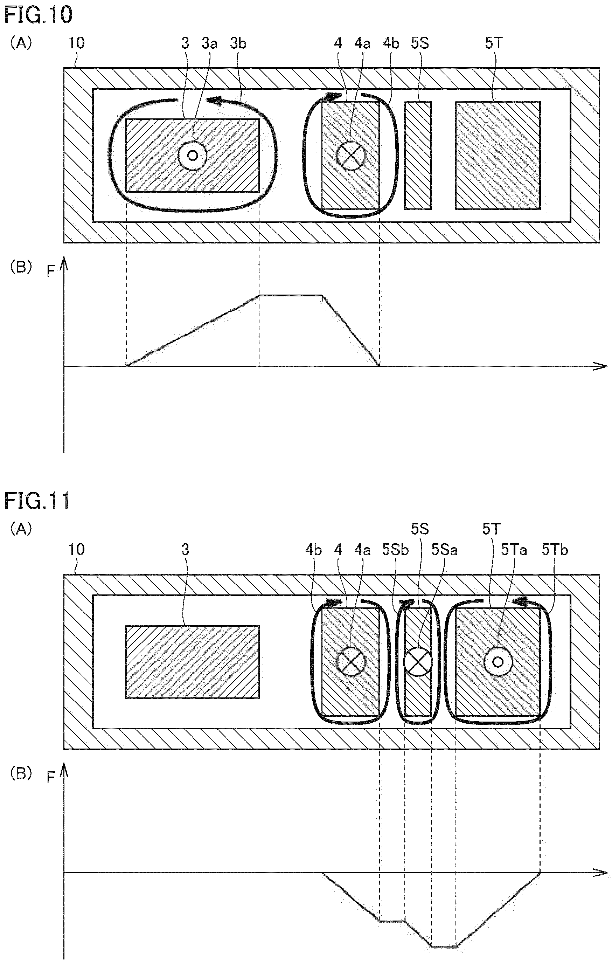

Fig. 10 (A) is a cross-sectional view as seen from one of the windows of the core, which shows currents and magnetic fluxes generated in the traction transformer according to the second embodiment in the state in which the load is connected to both ends of the secondary winding, and (B) is a graph showing a leakage flux generated in the core of the traction transformer according to the second embodiment in the state in which the load is connected to both ends of the secondary winding.
Fig. 11 (A) is a cross-sectional view as seen from one of the windows of the core, which shows currents and magnetic fluxes generated in the traction transformer according to the second embodiment in the state in which the load is connected to the secondary winding and the additional secondary winding that are connected in series with each other, and (B) is a graph showing a leakage flux generated in the core of the traction transformer according to the second embodiment in the state in which the load is connected to the secondary winding and the additional secondary winding that are connected in series with each other.

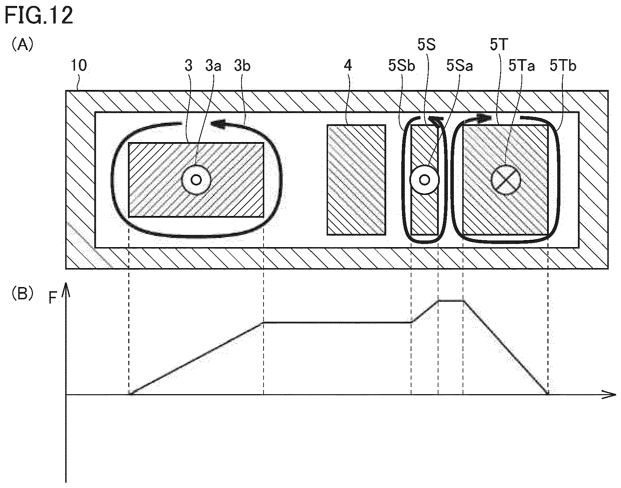

Fig. 12 (A) is a cross-sectional view as seen from one of the windows of the core, which shows currents and magnetic fluxes generated in the traction transformer according to the second embodiment in the state in which the load is connected to both ends of the additional secondary winding, and (B) is a graph showing a leakage flux generated in the core of the traction transformer according to the second embodiment in the state in which the load is connected to both ends of the additional secondary winding.

### DESCRIPTION OF EMBODIMENTS

A traction transformer and a railroad vehicle including the same according to each embodiment will be described hereinafter with reference to the drawings. In the following description of embodiments, the same or corresponding portions in the drawings are denoted by the same reference characters and description thereof will not be repeated.

### First Embodiment

Fig. 1 is a circuit diagram showing a configuration of a railroad vehicle equipped with a traction transformer according to a first embodiment. Fig. 2 is a perspective view showing the outer appearance of the traction transformer according to the first embodiment.

As shown in Figs. 1 and 2, a railroad vehicle 1000 which is an electrically powered vehicle includes a pantograph 2, a traction transformer 100, a converter 7, an inverter 8, a motor 9, and switches SW1 to SW5. Traction transformer 100 includes a primary winding 3, a secondary winding 4, an additional secondary winding 5, and a core 10. Railroad vehicle 1000 is configured to run both in an AC section where a single-phase AC voltage is supplied from an overhead line 1, and in a DC section where a DC voltage is supplied from overhead line 1.

Pantograph 2 is connected to overhead line 1. Primary winding 3 has a first terminal 6a provided at one end of primary winding 3, and a second terminal 6h provided at the other end of primary winding 3 and connected to a ground node to which a ground voltage is supplied. Primary winding 3 is wound around core 10. Core 10 has two windows.

Secondary winding 4 is magnetically coupled to primary winding 3. Specifically, secondary winding 4 is wound around core 10 in parallel with primary winding 3. Secondary winding 4 has a first terminal 6b provided at one end of secondary winding 4, and a second terminal 6c provided at the other end of secondary winding 4.

Additional secondary winding 5 includes at least one additional winding unit 5U formed of a first additional winding 5S and a second additional winding 5T. In the present embodiment, additional secondary winding 5 includes one additional winding unit 5U. First additional winding 5S is wound around core 10 in the same direction as that of secondary winding 4. Second additional winding 5T is wound around core 10 in the opposite direction to that of secondary winding 4. Second additional winding 5T is connected in series with first additional winding 5S.

The total number of turns of second additional winding 5T included in additional secondary winding 5 is the sum of the number of turns of first additional winding 5S included in additional secondary winding 5 and the number of turns of secondary winding 4. In the present embodiment, if the number of turns of secondary winding 4 is represented by N1 and the number of turns of first additional winding 5S is represented by N2, then the number of turns of second additional winding 5T is represented by (N1+N2).

If additional secondary winding 5 includes two additional winding units 5U, and the number of turns of secondary winding 4 is represented by N1 and the total number of turns of two first additional windings 5S is represented by N2, then the total number of turns of two second additional windings 5T is represented by (N1+N2).

Additional secondary winding 5 is magnetically coupled to primary winding 3. Specifically, additional secondary winding 5 is wound around core 10 in parallel with primary winding 3. Additional secondary winding 5 is wound around core 10 in parallel with secondary winding 4. Additional secondary winding 5 is connectable in series with secondary winding 4.

In the present embodiment, additional secondary winding 5 is partially disposed between primary winding 3 and secondary winding 4. Specifically, first additional winding 5S is disposed between primary winding 3 and secondary winding 4. Second additional winding 5T is disposed opposite to first additional winding 5S with respect to primary winding 3.

Additional secondary winding 5 has a first terminal 6d provided at one end of additional secondary winding 5, and a second terminal 6e provided at the other end of additional secondary winding 5. First terminal 6d of additional secondary winding 5 is electrically connected to second terminal 6c of secondary winding 4. First terminal 6d of additional secondary winding 5 and second terminal 6c of secondary winding 4 may be formed by a single shared terminal.

Switch SW1 selectively connects a terminal 6p connected to pantograph 2 to either first terminal 6a of primary winding 3 or first terminal 6b of secondary winding 4. Switch SW2 selectively connects a first input terminal 6q of converter 7 to either first terminal 6b of secondary winding 4 or first terminal 6d of additional secondary winding 5. Switch SW3 selectively connects a second input terminal 6r of converter 7 to either second terminal 6c of secondary winding 4 or second terminal 6e of additional secondary winding 5. Switch SW4 selectively connects a first input terminal 6s of inverter 8 to either second terminal 6e of additional secondary winding 5 or a first output terminal 6f of converter 7. Switch SW5 selectively connects a second input terminal 6t of inverter 8 to either a second output terminal 6g of converter 7 or second terminal 6h of primary winding 3.

Traction transformer 100 is configured to select, through switching of electrical connection between each of secondary winding 4 and additional secondary winding 5 and a load by switches SW1 to SW5, each of a state in which the load is connected to both ends of secondary winding 4, a state in which the load is connected to both ends of additional secondary winding 5, and a state in which the load is connected to secondary winding 4 and additional secondary winding 5 that are connected in series with each other.

Fig. 3 is a circuit diagram showing the state in which the load is connected to both ends of the secondary winding in the traction transformer according to the first embodiment. In this state, a single-phase AC voltage is supplied to railroad vehicle 1000 from overhead line 1, and traction transformer 100 functions as a transformer.

Specifically, as shown in Fig. 3, terminal 6p connected to pantograph 2 and first terminal 6a of primary winding 3 are electrically connected to each other by switch SW 1; first input terminal 6q of converter 7 and first terminal 6b of secondary winding 4 are electrically connected to each other by switch SW2; second input terminal 6r of converter 7 and second terminal 6c of secondary winding 4 are electrically connected to each other by switch SW3; first input terminal 6s of inverter 8 and first output terminal 6f of converter 7 are electrically connected to each other by switch SW4; and second input terminal 6t of inverter 8 and second output terminal 6g of converter 7 are electrically connected to each other by switch SW5.

This places traction transformer 100 in the state in which the load is connected to both ends of secondary winding 4. Specifically, the load is connected between first terminal 6b and second terminal 6c of secondary winding 4. This load is formed of converter 7 that converts the single-phase AC voltage into a DC voltage, inverter 8 that converts the DC voltage received from converter 7 into a three-phase AC voltage, and motor 9 driven by the three-phase AC voltage received from inverter 8.

Fig. 4(A) is a cross-sectional view as seen from one of the windows of the core, which shows currents and magnetic fluxes generated in the traction transformer according to the first embodiment in the state in which the load is connected to both ends of the secondary winding. Fig. 4(B) is a graph showing a leakage flux generated in the core of the traction transformer according to the first embodiment in the state in which the load is connected to both ends of the secondary winding. In Fig. 4(B), the vertical axis indicates the magnitude of a magnetomotive force F, and the horizontal axis corresponds to a position on the core shown in Fig. 4(A).

As shown in Fig. 4(A), a leakage flux 3b is generated by a current 3a flowing through primary winding 3. A leakage flux 4b is generated by a current 4a flowing through secondary winding 4. As a result, magnetomotive force F is generated in core 10 as shown in Fig. 4(B), and a reactance having a leakage inductance value of L1 can thereby be obtained.

Fig. 5 is a circuit diagram showing the state in which the load is connected to the secondary winding and the additional secondary winding that are connected in series with each other in the traction transformer according to the first embodiment. In this state, a DC voltage is supplied to railroad vehicle 1000 from overhead line 1, and traction transformer 100 functions as a reactor.

Specifically, as shown in Fig. 5, terminal 6p connected to pantograph 2 and first terminal 6b of secondary winding 4 are electrically connected to each other by switch SW1; first input terminal 6s of inverter 8 and second terminal 6e of additional secondary winding 5 are electrically connected to each other by switch SW4; and second input terminal 6t of inverter 8 and second terminal 6h of primary winding 3 connected to the ground node to which the ground voltage is supplied are electrically connected to each other by switch SW5.

This places traction transformer 100 in the state in which the load is connected to secondary winding 4 and additional secondary winding 5 that are connected in series with each other. Specifically, the load, which is formed of inverter 8 that converts the DC voltage into a three-phase AC voltage, and motor 9 driven by the three-phase AC voltage received from inverter 8, is connected to secondary winding 4 and additional secondary winding 5.

Fig. 6(A) is a cross-sectional view as seen from one of the windows of the core, which shows currents and magnetic fluxes generated in the traction transformer according to the first embodiment in the state in which the load is connected to the secondary winding and the additional secondary winding that are connected in series with each other. Fig. 6(B) is a graph showing a leakage flux generated in the core of the traction transformer according to the first embodiment in the state in which the load is connected to the secondary winding and the additional secondary winding that are connected in series with each other. In Fig. 6(B), the vertical axis indicates the magnitude of magnetomotive force F, and the horizontal axis corresponds to a position on the core shown in Fig. 6(A).

No inductance is generated when a DC current is flowing through each of secondary winding 4 and additional secondary winding 5. When the DC current flowing through each of secondary winding 4 and additional secondary winding 5 contains a pulsating component, that is, an AC component, however, a leakage flux is generated in the core, and an inductance can thereby be obtained. Specifically, as shown in Fig. 6(A), leakage flux 4b is generated by current 4a flowing through secondary winding 4. A leakage flux 5Sb is generated by a current 5Sa flowing through first additional winding 5S. A leakage flux STb is generated by a current 5Ta flowing through second additional winding 5T. As a result, magnetomotive force F is generated in core 10 as shown in Fig. 6(B), and an inductance can thereby be obtained. Thus, the AC component contained in the DC current flowing through each of secondary winding 4 and additional secondary winding 5 can be attenuated.

Fig. 7 is a circuit diagram showing the state in which the load is connected to both ends of the additional secondary winding in the traction transformer according to the first embodiment. In this state, a single-phase AC voltage is supplied to railroad vehicle 1000 from overhead line 1, and traction transformer 100 functions as a transformer.

Specifically, as shown in Fig. 7, terminal 6p connected to pantograph 2 and first terminal 6a of primary winding 3 are electrically connected to each other by switch SW1; first input terminal 6q of converter 7 and first terminal 6d of additional secondary winding 5 are electrically connected to each other by switch SW2; second input terminal 6r of converter 7 and second terminal 6e of additional secondary winding 5 are electrically connected to each other by switch SW3; first input terminal 6s of inverter 8 and first output terminal 6f of converter 7 are electrically connected to each other by switch SW4; and second input terminal 6t of inverter 8 and second output terminal 6g of converter 7 are electrically connected to each other by switch SW5.

This places traction transformer 100 in the state in which the load is connected to both ends of additional secondary winding 5. Specifically, the load is connected between first terminal 6d and second terminal 6e of additional secondary winding 5. This load is formed of converter 7 that converts the single-phase AC voltage into a DC voltage, inverter 8 that converts the DC voltage received from converter 7 into a three-phase AC voltage, and motor 9 driven by the three-phase AC voltage received from inverter 8.

Fig. 8(A) is a cross-sectional view as seen from one of the windows of the core, which shows currents and magnetic fluxes generated in the traction transformer according to the first embodiment in the state in which the load is connected to both ends of the additional secondary winding. Fig. 8(B) is a graph showing a leakage flux generated in the core of the traction transformer according to the first embodiment in the state in which the load is connected to both ends of the additional secondary winding. In Fig. 8(B), the vertical axis indicates the magnitude of magnetomotive force F, and the horizontal axis corresponds to a position on the core shown in Fig. 8(A).

As shown in Fig. 8(A), leakage flux 3b is generated by current 3a flowing through primary winding 3. Leakage flux 5Sb is generated by current 5Sa flowing through first additional winding 5S. Leakage flux STb is generated by current 5Ta flowing through second additional winding 5T. As a result, magnetomotive force F is generated in core 10 as shown in Fig. 8(B), and a reactance having a leakage inductance value of L2 can thereby be obtained.

First additional winding 5S is wound around core 10 in the same direction as that of secondary winding 4, second additional winding 5T is wound around core 10 in the opposite direction to that of secondary winding 4, and if the number of turns of secondary winding 4 is represented by N1 and the number of turns of first additional winding 5S is represented by N2, then the number of turns of second additional winding 5T is represented by (N1+N2).

Thus, current 5Sa induced by a main magnetic flux generated in core 10 and flowing through first additional winding 5S flows in the opposite direction to that of current 5Ta induced by the main magnetic flux generated in core 10 and flowing through second additional winding 5T, and is therefore canceled out in additional secondary winding 5. As a result, the voltage induced in additional secondary winding 5 by the main magnetic flux generated in core 10 is a voltage corresponding to the ratio between the number of turns N1, which is the number of turns (N1+N2) of second additional winding 5T minus the number of turns N2 of first additional winding 5S, and the number of turns of primary winding 3. In other words, additional secondary winding 5 in the circuit shown in Fig. 7 has the same voltage ratio as that of secondary winding 4 in the circuit shown in Fig. 3.

As described above, in traction transformer 100 according to the present embodiment, a plurality of leakage inductance values can be selected, and reactances having different leakage inductance values can be obtained while the voltage ratio is maintained. In addition, the number of selectable leakage inductance values can be increased as the number of additional winding units 5U included in additional secondary winding 5 increases. Furthermore, in traction transformer 100 according to the present embodiment, traction transformer 100 includes additional secondary winding 5 connected in series with secondary winding 4, which eliminates the need to provide an individual reactor device separate from traction transformer 100, thereby reducing the size of traction transformer 100.

In traction transformer 100 according to the present embodiment, additional secondary winding 5 is partially disposed between primary winding 3 and secondary winding 4. This allows for an increase in distance between primary winding 3 and secondary winding 4 as shown in Fig. 4(A), thereby ensuring a large leakage inductance value as shown in Fig. 4(B).

### Second Embodiment

A traction transformer according to a second embodiment will be described hereinafter with reference to the drawings. The traction transformer according to the second embodiment is different from traction transformer 100 according to the first embodiment only in the arrangement of windings, and thus the description of a configuration similar to that of traction transformer 100 according to the first embodiment will not be repeated.

Fig. 9 is a perspective view showing the outer appearance of the traction transformer according to the second embodiment. As shown in Fig. 9, in a traction transformer 200 according to the second embodiment, secondary winding 4 is disposed between primary winding 3 and additional secondary winding 5. Specifically, secondary winding 4 is disposed between primary winding 3 and first additional winding 5S. Second additional winding 5T is disposed opposite to secondary winding 4 with respect to first additional winding 5S.

Fig. 10(A) is a cross-sectional view as seen from one of the windows of the core, which shows currents and magnetic fluxes generated in the traction transformer according to the second embodiment in the state in which the load is connected to both ends of the secondary winding. Fig. 10(B) is a graph showing a leakage flux generated in the core of the traction transformer according to the second embodiment in the state in which the load is connected to both ends of the secondary winding. In Fig. 10(B), the vertical axis indicates the magnitude of magnetomotive force F, and the horizontal axis corresponds to a position on the core shown in Fig. 10(A).

As shown in Fig. 10(A), leakage flux 3b is generated by current 3a flowing through primary winding 3. Leakage flux 4b is generated by current 4a flowing through secondary winding 4. As a result, magnetomotive force F is generated in core 10 as shown in Fig. 10(B), and a reactance having a leakage inductance value of L3 can thereby be obtained.

Fig. 11(A) is a cross-sectional view as seen from one of the windows of the core, which shows currents and magnetic fluxes generated in the traction transformer according to the second embodiment in the state in which the load is connected to the secondary winding and the additional secondary winding that are connected in series with each other. Fig. 11(B) is a graph showing a leakage flux generated in the core of the traction transformer according to the second embodiment in the state in which the load is connected to the secondary winding and the additional secondary winding that are connected in series with each other. In Fig. 11(B), the vertical axis indicates the magnitude of magnetomotive force F, and the horizontal axis corresponds to a position on the core shown in Fig. 11(A).

As shown in Fig. 11(A), leakage flux 4b is generated by current 4a flowing through secondary winding 4. Leakage flux 5Sb is generated by current 5Sa flowing through first additional winding 5S. Leakage flux STb is generated by current 5Ta flowing through second additional winding 5T. As a result, magnetomotive force F is generated in core 10 as shown in Fig. 11(B), and an inductance value can thereby be gained. Thus, the AC component contained in the DC current flowing through each of secondary winding 4 and additional secondary winding 5 can be attenuated.

Fig. 12(A) is a cross-sectional view as seen from one of the windows of the core, which shows currents and magnetic fluxes generated in the traction transformer according to the second embodiment in the state in which the load is connected to both ends of the additional secondary winding. Fig. 12(B) is a graph showing a leakage flux generated in the core of the traction transformer according to the second embodiment in the state in which the load is connected to both ends of the additional secondary winding. In Fig. 12(B), the vertical axis indicates the magnitude of magnetomotive force F, and the horizontal axis corresponds to a position on the core shown in Fig. 12(A).

As shown in Fig. 12(A), leakage flux 3b is generated by current 3a flowing through primary winding 3. Leakage flux 5Sb is generated by current 5Sa flowing through first additional winding 5S. Leakage flux STb is generated by current 5Ta flowing through second additional winding 5T. As a result, magnetomotive force F is generated in core 10 as shown in Fig. 12(B), and a reactance having a leakage inductance value of L4 can thereby be obtained.

In traction transformer 200 according to the present embodiment, secondary winding 4 is disposed between primary winding 3 and additional secondary winding 5. This allows for an increase in distance between primary winding 3 and additional secondary winding 5 as shown in Fig. 12(A), thereby ensuring a large leakage inductance value as shown in Fig. 12(B).

It should be understood that the embodiments disclosed herein are illustrative in every respect, and do not serve as a basis for restrictive interpretation. Therefore, the technical scope of the present disclosure is defined based on the terms of the claims, rather than interpreted based on only the embodiments described above, and encompasses any modifications within the scope and meaning equivalent to the terms of the claims.

### REFERENCE SIGNS LIST

1 overhead line; 2 pantograph; 3 primary winding; 4 secondary winding; 3a, 4a, 5Sa, 5Ta current; 3b, 4b, 5Sb, STb leakage flux; 5 additional winding; 5S first additional winding; 5T second additional winding; 5U additional winding unit; 6 00, 6a, 6b, 6d first terminal; 6c, 6e, 6h second terminal; 6f first output terminal; 6g second output terminal; 6p terminal; 6q, 6s first input terminal; 6r, 6t second input terminal; 7 converter; 8 inverter; 9 motor; 10 core; 100, 200 traction transformer; 1000 railroad vehicle; F magnetomotive force; N1, N2 number of turns; SW1, SW2, SW3, SW4, SW5 switch.

## Claims

1. A traction transformer comprising:
a core;
a primary winding wound around the core;
a secondary winding wound around the core in parallel with the primary winding; and
an additional secondary winding wound around the core in parallel with the secondary winding, and connectable in series with the secondary winding, wherein
the additional secondary winding includes at least one additional winding unit, the additional winding unit being formed of a first additional winding and a second additional winding, the first additional winding being wound around the core in the same direction as that of the secondary winding, and the second additional winding being wound around the core in the opposite direction to that of the secondary winding and connected in series with the first additional winding,
the total number of turns of the second additional winding included in the additional secondary winding is the sum of the number of turns of the first additional winding included in the additional secondary winding and the number of turns of the secondary winding, and
the traction transformer is configured to select, through switching of electrical connection between each of the secondary winding and the additional secondary winding and a load, each of a state in which the load is connected to both ends of the secondary winding, a state in which the load is connected to both ends of the additional secondary winding, and a state in which the load is connected to the secondary winding and the additional secondary winding that are connected in series with each other.

2. The traction transformer according to claim 1, wherein
the additional secondary winding is partially disposed between the primary winding and the secondary winding.

3. The traction transformer according to claim 1, wherein
the secondary winding is disposed between the primary winding and the additional secondary winding.

4. The traction transformer according to any one of claims 1 to 3, wherein
in each of the state in which the load is connected to both ends of the secondary winding and the state in which the load is connected to both ends of the additional secondary winding, the load is formed of a converter that converts an AC voltage into a DC voltage, an inverter that converts the DC voltage received from the converter into a three-phase AC voltage, and a motor driven by the three-phase AC voltage received from the inverter.

5. The traction transformer according to any one of claims 1 to 3, wherein
in the state in which the load is connected to the secondary winding and the additional secondary winding that are connected in series with each other, the load is formed of an inverter that converts a DC voltage into a three-phase AC voltage, and a motor driven by the three-phase AC voltage received from the inverter.

6. A railroad vehicle comprising the traction transformer according to any one of claims 1 to 5.
